# EUROPEAN PATENT APPLICATION

(11) **EP 2 281 493 A1**
(43) Date of publication of application: **09.02.2011**
(21) Application number: 09166720.4
(22) Date of filing: 29.07.2009
(51) Int. Cl.: A47J 31/44

(54) **A device and a method for heating up a cup**

(71) Applicant: Koninklijke Philips Electronics N.V., 5621 BA Eindhoven (NL)
(72) Inventor: The designation of the inventor has not yet been filed
(74) Representative: Damen, Daniel Martijn

(57) **Abstract**

A device for heating up a cup, comprising a steam conduit (3) for guiding steam into the cup (1), and comprising a water suction conduit (8) for sucking water out of the cup (1). Preferably, the water suction conduit (8) is connected with the steam conduit (3) in such manner that the flow of steam through the steam conduit (3) sucks water and/or air out of the water suction conduit (8).

## Description

### FIELD OF THE INVENTION

The invention is related to a device for heating up a cup, comprising a steam conduit for guiding steam into the cup. The expression 'cup' includes any kind of drinking container, such as a drinking glass, a goblet, a mug, etc.

### BACKGROUND OF THE INVENTION

When filling a cold cup with a warm drink, such as hot coffee, hot tea or hot chocolate, the cup will be heated up by the hot drink and, at the same time, the drink will be cooled down. In order to avoid the cooling down of the hot drink, the cup can be heated before it is filled with the hot drink. It is known that such heating operation can take place, for example, by means of an electric heating plateau or by means of steam injected into the cup.

### SUMMARY OF THE INVENTION

The object of the invention is an improved device and method for heating up a cup, whereby steam is injected into the cup.

In order to accomplish with that object, the device comprises a water suction conduit for sucking water out of the cup. The water may be sucked out of the cup after the cup is heated up, but preferably, the water is sucked out of the cup simultaneously with the steam injection. When a cup is heated by injection of steam into the cup, the steam will condense in the cold cup so that water will accumulate in the cup. Such accumulated water will dilute the hot drink when it is brought into the cup. By sucking the accumulated water out of the cup before the cup is filled with the drink, dilution of the drink is avoided.

In a preferred embodiment of the invention, the water suction conduit is connected with the steam conduit in such manner that the flow of steam through the steam conduit sucks water and/or air out of the water suction conduit. Thereby, the suction operation is automatically started when steam begins to flow to the cup. The flow of steam through the steam conduit can drive a mechanical suction pump in order to suck water and/or air out of the water suction conduit.

In a preferred embodiment, the steam conduit comprises a narrow portion so that a Venturi effect is created whereby the pressure in said narrow portion is below the environmental air pressure, and whereby the water suction conduit is connected with the steam conduit at the location of said narrow portion, so that water and/or air is sucked by said Venturi effect. Thereby, the water is sucked out of the cup in an effective and efficient manner, without the presence of moving parts such as a pump or a valve, and without the need of additional power supply.

In another preferred embodiment, whereby an ejector pump for sucking water and/or air out of the water suction conduit is present, which ejector pump is driven by the steam flow in the steam conduit. The functioning of such known ejector pump is based on the solution of mass and momentum equations within the steam conduit. Preferably, the steam conduit and the water suction conduit join together and continue as steam conduit in which the steam is mixed with water and/or air from the water suction conduit, whereby the angle between the direction of the approaching steam flow through the steam conduit and the direction of the approaching water and/or air flow through the water suction conduit is less than 60°, preferable less than 45°. Thereby, water and/or air is sucked out of the water suction conduit in a simple and effective way. An example of such embodiment will be described hereinafter.

The water sucked out of the cup through the water suction conduit can be mixed with the steam in the steam conduit. Thereby, the water in the flow of steam downstream of said narrow portion can be removed in many ways, for example by making the temperature of the steam higher than 100°C, so that the water will be evaporated. In another embodiment of the invention the water suction conduit can be provided with a water collection chamber in order to separate the water from the air that is sucked by the flow of steam in the steam conduit.

Preferably, a water collection chamber is present downstream of the location where the water suction conduit is connected with the steam conduit, through which water collection chamber the steam passes, whereby the water collection chamber has a lower part where water can accumulate. In a preferred embodiment, the water collection chamber is provided with an opening at its lower side, through which opening water can leave the water collection chamber, whereby the pressure of the steam drives the water through said opening. Of course, the opening has to be small, so that only a limited quantity of steam may escape through said opening.

In a preferred embodiment, a steam injection unit is present, which unit can reach into the cup to be heated, whereby the steam injection unit comprises the steam injecting end portion of the steam conduit and the water sucking end portion of the water suction conduit, whereby said water sucking end portion extends further than said steam injecting end portion of the steam conduit, so that said water sucking end portion of the water suction conduit can contact the bottom of the cup, while the steam leaves said steam injecting end portion of the steam conduit at some distance from the bottom of the cup.

Preferably, the steam injection unit comprises a spout member being the end portion of the steam conduit, whereby the end portion of the water suction conduit is a water hose extending through said spout member. This embodiment will be described hereinafter as an example of applying the invention.

The invention is also related to a beverage making device for making a hot beverage, comprising a steam producing apparatus and a device for heating up a cup as is described above, whereby means are present for temporarily supplying steam from said steam producing apparatus to said device for heating a cup.

Furthermore, the invention is related to a method for heating up a cup, whereby steam is injected into the cup, whereby water is sucked out of the cup at the same time, and whereby, in a preferred embodiment, the water suction conduit is connected with the steam conduit in such manner that the flow of steam through the steam conduit sucks water and/or air out of the water suction conduit, as is described above.

### BRIEF DESCRIPTION OF THE DRAWING

The invention will now be further elucidated by means of an example of a device for heating up a cup, comprising steam injection means for injecting steam into the cup, whereby reference is made to a diagrammatic and schematic drawing, whereby:
Fig. 1 shows a first embodiment comprising a Venturi suction system; and
Fig. 2 shows a second embodiment having an ejector pump system.

The figures show only components of the device that contribute to the elucidation of the described embodiments of the invention.

### DETAILED DESCRIPTION OF TWO EMBODIMENTS

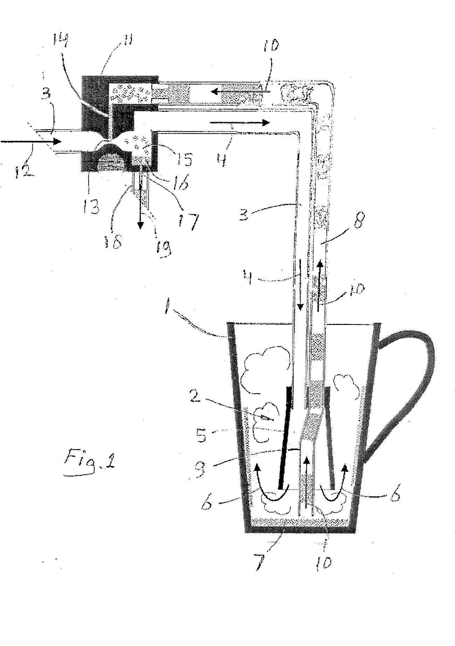

Figure 1 shows a cup 1 and a steam injection unit 2, which steam injection unit 2 reaches into the cup 1. Steam is flowing to the steam injection unit 2 through a steam conduit 3 as is indicated by two arrows 4. The end of steam conduit 3 is connected to a spout member 5 having a divergent shape in downward direction. The spout member 5 can be made of flexible material such as rubber or plastic. The steam leaves the spout member 5 at its lower side, as is indicated by two arrows 6, and the cup 1 will then be heated up by condensation of the steam, whereby water 7 will accumulate in the lower part of the cup 1.

The spout member 5 is also connected with a water suction conduit 8, whereby the end portion of the water suction conduit 8 is shaped as a hose 9 extending through the spout member 5. The hose 9 may also be made of flexible material such as plastic or rubber. The hose 9 extends beyond the lower side of the spout member 5, so that the end of the hose 9 can be located close to the bottom of cup 1, while the lower side of the spout member 5 has some distance from that bottom. By decreasing the pressure in the water suction conduit 8, the water 7 on the bottom of the cup 1 will be sucked away through the water suction conduit 8, as is indicated by three arrows 10.

The represented device is connected with a steam supplying apparatus (not shown in the figure), which apparatus includes means for switching on and switching off the steam supply. When the steam supply is switched on, the flow of steam first enters a water suction module 11, as is indicated by arrow 12. In the water suction module 11 the steam flow passes a narrow portion 13 of the steam conduit 3. In that constricted section 13 a Venturi effect is created, whereby the pressure in the steam flow decreases below the environmental air pressure.

The water suction conduit 8 is connected by channel 14 with the narrow portion 13 of the steam conduit 3 where the pressure in the steam flow is decreased below the environmental air pressure. Therefore, air and/or water is sucked into the steam flow. Downstream of the narrow portion 13 is a water collection chamber 15 having a lower part 16 where the water accumulates. The accumulated water is pressed out of the water collection chamber 15 by the pressure in the steam conduit 3 through a small opening 17 in the lower wall of the water collection chamber 15. The water is guided away through conduct 18, as is indicated by arrow 19.

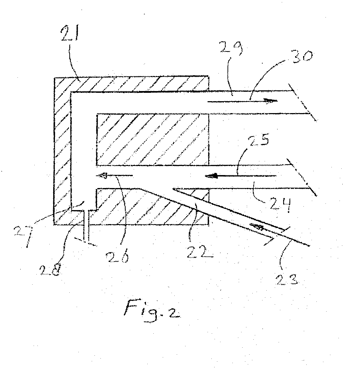

Figure 2 shows an alternative suction module 21, whereby the water and/or air is sucked by means of a so called ejector-pump effect. An ejector pump is known and its functioning is based on the solution of mass and momentum equations within the steam conduit. The flow of steam entering the suction module 21 through steam conduit 22 is indicated by arrow 23. The flow of water and/or air though the water suction conduit 24 is indicated by arrow 25. The two flows 23,25 merge and continue as is indicated by arrow 26. Then, the flow passes a water collection chamber 27, whereby the water in the flow will accumulate in the lower part of water collection chamber 27, and leave the chamber 27 through channel 28. The flow of steam leaves the suction module 21 towards the steam injection unit 2 (see figure 1) through steam conduit 29, as is indicated by arrow 30.

While the invention has been illustrated in the drawing and the foregoing description, such illustration and description are to be considered illustrative or exemplary and not restrictive; the invention is not limited to the disclosed embodiments. Any reference signs in the claims should not be construed as limiting the scope of the invention.

## Claims

1. A device for heating up a cup, comprising a steam conduit (3;22,29) for guiding steam into the cup (1), **characterized in that** the device comprises a water suction conduit (8;24) for sucking water out of the cup (1).

2. A device as is claimed in claim 1, **characterized in that** the water suction conduit (8;24) is connected with the steam conduit (3;22,29) in such manner that the flow of steam through the steam conduit (3;22,29) sucks water and/or air out of the water suction conduit (8;24).

3. A device as is claimed in claim 2, **characterized in that** the steam conduit (3) comprises a narrow portion (13) so that a Venturi effect is created whereby the pressure in said narrow portion (13) is below the environmental air pressure, and whereby the water suction conduit (8) is connected with the steam conduit (3) at the location of said narrow portion (13).

4. A device as is claimed in claim 2, **characterized by** the presence of an ejector pump (21) for sucking water and/or air out of the water suction conduit (24), which ejector pump is driven by the steam flow in the steam conduit (22,29).

5. A device as is claimed in claim 4, **characterized in that** the steam conduit (23) and the water suction conduit (24) join together, whereby the angle between the direction of the approaching steam flow (23) through the steam conduit (22) and the direction of the approaching water and/or air flow (25) through the water suction conduit (24) is less than 60°, preferable less than 45°.

6. A device as is claimed in anyone of claims 2-5, **characterized in that** a water collection chamber (15;27) is present downstream of the location where the water suction conduit (8,14;24) is connected with the steam conduit (3;22), through which water collection chamber (15;27) the steam passes, whereby the water collection chamber (15;27) has a lower part (16) where water can accumulate.

7. A device as is claimed in claim 6, **characterized** that the water collection chamber (15;27) is provided with an opening (17,28) at its lower side, through which opening water can leave the collection chamber (15;27).

8. A device as is claimed in any one of the preceding claims, **characterized by** a steam injection unit (2) that can reach into the cup (1) to be heated, whereby the steam injection unit (2) comprises the steam injecting end portion of the steam conduit (3) and the water sucking end portion of the water suction conduit (8), whereby said water sucking end portion of the water suction conduit (8) extends further than said steam injecting end portion of the steam conduit (3).

9. A device as is claimed in claim 8, **characterized in that** the steam injection unit (2) comprises a spout member (5) being the end portion of the steam conduit (3), and **in that** the end portion of the water suction conduit (8) is a water hose (9) extending through said spout member (5).

10. A beverage making device for making a hot beverage, comprising a steam producing apparatus and a device for heating up a cup as is claimed in any one of the preceding claims, whereby means are present for temporarily supplying steam from said steam producing apparatus to said device for heating a cup.

11. A method for heating up a cup, whereby steam is injected into the cup (1), **characterized in that** water is sucked out of the cup (1) at the same time.
